# EUROPÄISCHE PATENTSCHRIFT

(11) **EP 1 393 499 B1**
(45) Veröffentlichungstag und Bekanntmachung des Hinweises auf die Patenterteilung: **28.06.2006**
(21) Anmeldenummer: 02740459.9
(22) Anmeldetag: 10.04.2002
(51) Int. Cl.: H04L 12/26, H04M 3/22

(54) **VERFAHREN UND ANORDNUNG ZUR STANDORTUNABHÄNGIGEN ÜBERWACHUNG VON SPRACH- UND/ODER DATENNETZVERBINDUNGEN DURCH BEDARFSTRÄGER**
METHOD AND ARRANGEMENT FOR INTERCEPTION OF VOICE AND/OR DATA NETWORK CONNECTIONS INDEPENDENT OF LOCATION BY LAW ENFORCEMENT AGENCIES
PROCEDE ET SYSTEME POUR SURVEILLER DES TRANSMISSIONS DE SIGNAUX VOCAUX ET/OU DE DONNEES SUR UN RESEAU, INDEPENDANT DE LA LOCALISATION, PAR UN OFFICE DEMANDEUR

(30) Priorität: 03.05.2001 DE 10121496
(43) Veröffentlichungstag der Anmeldung: 03.03.2004
(73) Patentinhaber: GTEN AG, 85737 Ismaning (DE)
(72) Erfinder: HOFFMANN, Paul, 85457 Wörth (DE); SCHAU, Wolfgang, 28205 Bremen (DE)
(74) Vertreter: Grape, Knut
(86) Internationale Anmeldenummer: PCT/EP2002/004006
(87) Internationale Veröffentlichungsnummer: WO 2002/091675

(56) Entgegenhaltungen:
- WO-A-00/27101
- WO-A-00/42742
- WO-A-01/19036
- WO-A-98/36548
- WO-A-99/39492
- REGULATORY AUTHORITY FOR TELECOMMUNICATIONS AND POSTS: "Technical Directive setting forth Requirements relating to the Implementation of Legal Measures for the Interception of Telecommunications (TRFÜV), Version 3.0, pages 1 to 31" [Online] November 2001 (2001-11) , FEDERAL MINISTRY OF ECONOMICS AND TECHNOLOGY , BONN, GERMANY XP002214806 Gefunden im Internet: <URL: www.regtp.de> [gefunden am 2002-09-25] Seite 13 -Seite 31

## Beschreibung

Die Erfindung betrifft ein Verfahren zur ortsunabhängigen Überwachung von Sprach- und/oder Datennetzverbindungen gemäß den Merkmalen von Anspruch 1.

Die Gesetzgebung erlaubt im Rahmen des Fernmeldegeheimnisses gemäß Artikel 10 des Grundgesetzes, der Strafprozessordnung, des Außenwirtschaftsgesetzes, der Fernmeldverkehr-Überwachungs-Verordnung (FÜV) und der Technischen Richtlinie zur Beschreibung der Anforderungen an die Umsetzung gesetzlicher Maßnahmen zur Überwachung der Telekommunikation (TRFÜV), d.h. unter ganz bestimmten Voraussetzungen, die Überwachung von sowohl Sprach- als auch Datenleitungen durch Behörden (Bedarfsträger), wie dem Bundeskriminalamt, Landeskriminalämter, Zollkriminalamt, Verfassungsschutz u.a., jeweils nach Ausstellung einer richterlichen Genehmigung. Anbieter von Netzdiensten, sogenannte Netzbetreiber bzw. Carrier, sind dabei verpflichtet, solche Überwachungen vornehmen zu können. Beispielsweise ist eine Überwachung auf Seiten von Internet Service Providern (ISPn) angezeigt, um die Verbreitung von Kinderpornographie etc. im Internet aufzudecken und/oder zu verfolgen.

Zu diesem Zweck sind derzeit sogenannte systemintegrierte Lösungen bekannt. Diese bekannten Lösungen weisen jedoch nicht zuletzt aufgrund der besonderen konstruktiven Ausgestaltung zum Teil ganz gravierende technische und wirtschaftliche Nachteile auf. An die Überwachung sind zunächst ganz spezielle und jederzeit überprüfbare Bedingungen geknüpft, damit eine solche Überwachung vom Gesetz bzw. von der richterlichen Anordnung abgedeckt ist. So sind ausgesprochen komplexe Ereignisse bei solchen Überwachungsmaßnahmen zu erkennen, herauszufiltern, zu kopieren und über ein geeignetes Netz an einen oder mehrere Bedarfsträger weiterzuleiten, und zwar derart, dass die übermittelte Information dem zu übertragenen Teil des "Originals" der überwachten Kommunikation an der zu überwachenden Leitung entspricht, allerdings nur der Teil, welcher durch eine entsprechende richterliche Überwachungsmaßnahme abgedeckt ist. Die momentan bekannten systemintegrierten Lösungen sind allenfalls im Bereich von analogen Sprachnetzen vorgesehen und zudem bereits in technischer Hinsicht nicht in der Lage, diesen Anforderungen zu genügen, weil allenfalls bestimmte Adressinformationen zum Zwecke der Vermittlung, aber keine Dateninhalte selbst untersucht werden. Auch eine zuverlässige Identifikation der Information ist bei diesen systemintegrierten Lösungen nicht gegeben. So muss die überwachte Information eindeutig dokumentiert, markiert und mit zum Beispiel amtlichen Zeitstempeln versehen werden, damit sich die Aufzeichnungen gegebenenfalls vor Gericht als Beweis verwenden lassen. Von besonderem Nachteil bei diesen bekannten systemintegrierten Lösungen ist darüber hinaus die Tatsache, dass eine Datenüberwachung von Netzwerkkomponenten im Zweirichtungsverkehr mit einer Sende- und einer Empfangsseite weder vorgesehen noch möglich ist. Gleichzeitig ist bei diesen systemintegrierten Lösungen dem Aspekt des Schutzes gegen Kenntnisnahme der übertragenen Information durch unbefugte Dritte nicht ausreichend Rechnung getragen. Eine unbefugte Kenntnisnahme oder Mitlesen von seiten Dritter bei der Übertragung sind insoweit ohne größeren Aufwand möglich. Schließlich sind solche systemintegrierten Lösungen ausgesprochen kostenintensiv, sämtliche Knoten des jeweiligen Netzbetreibers mit solchen systemintegrierten Lösungen auszustatten und letztendlich zu unterhalten. Beistell-Lösungen zur ortsunabhängigen Überwachung von Sprach- und/oder Datennetzverbindungen, die zudem verhältnismäßig kostengünstig sind, sind hingegen bis dato nicht bekannt.

Im Bereich der Datenübertragung ergeben sich darüber hinaus aufgrund der besonderen Charakteristika von Datenübertragungsnetzen zum Teil anders geartete und wesentlich schwieriger zu lösende Problemstellungen. So muss eine passive unauffällige bzw. unbemerkbare Aufschaltung auf die unterschiedlichsten Interfaces mit vielen unterschiedlichen Geschwindigkeiten im Bereich der Weitverkehrsnetze (WAN), der lokalen Netze (LAN) und ATM-Netze (ATM) erfolgen. Eine große Anzahl unterschiedliche Netzwerkprotokolle zuzüglich deren Varianten in Abhängigkeit von bestimmten Ereignissen auf Protokollebene und auf Userdaten-Ebene, auch in Form von konditionellen Ereignisabläufen sind zu erkennen, zu filtern 'und zu kopieren, ohne dass die Überwachungseinrichtung wie eine Übertragungskomponente im Übertragungsnetz (Hubs, Bridges, Router, Switches etc) am Netzprozess selbst beteiligt ist und somit jederzeit bestimmte Informationen abfragen kann. Dazu besteht die Forderung nach einer Filterung/Extraktion, wenn zum Beispiel auf einer Datenübertragungsleitung eine bestimmte Anzahl von Teilnehmern miteinander kommuniziert, wie das bei paketvermittelten Netzen (zum Beispiel X.25, Frame Relay, TCP/IP) oder Zellvermittelnden Netzen (zum Beispiel ATM) der Fall ist, die behördliche angeordnete Überwachung jedoch nur für einen oder mehrere bestimmte Teilnehmer im Netzgeschehen gilt. Insoweit ergeben sich besondere Schwierigkeiten in dem Fall, wenn zum Beispiel auf einer Datenübertragungsleitung eine bestimmte Anzahl von Teilnehmern miteinander kommuniziert, wie bei paketvermittelten Netzen (zum Beispiel X.25, Frame Relay, TCP/IP) oder Zellvermittelnden Netzen (zum Beispiel ATM), die behördliche angeordnete Überwachung jedoch nur für einen oder mehrere bestimmte Teilnehmer im Netzgeschehen gilt. Eine Einfügung von eindeutigen Bezeichnungen und von amtlichen Zeitstempeln zur Identifikation der Daten in den Datenstrom ist darüber hinaus vorgeschrieben. Diese Ergänzungen müssen jedoch so eingefügt werden, dass keine Beeinflussung der Integrität der überwachten Daten und auch keine zeitliche Verfälschung stattfindet. Bei der Weiterleitung der relevanten Datenkommunikation über sogenannte Transitnetze an den/die Bedarfsträger kann das Netz der zu überwachenden Verbindung aus wirtschaftlichen oder technischen Gründen ein anderes Netz sein, als das Transitnetz zur Übermittlung der Daten an den/die Bedarfsträger. So kann zum Beispiel die Überwachung einer X.25-Verbindung angeordnet sein. Die zur Überwachung durch einen Bedarfsträger relevanten Daten werden jedoch nur dann, wenn der oder die besagten überwachten Teilnehmer aktiv kommunizieren, über eine zu aktivierende Wählverbindung (zum Beispiel über ein ISDN-Netz) an den/die Bedarfsträger übermittelt.

Darüber hinaus beschreibt die WO 00/42742 vordergründig ein Verfahren und eine Anordnung zur ortsunabhängigen Überwachung von Sprachnetzen durch Bedarfsträger, um (potentielle) Straftäter zu überwachen und insoweit (mögliche) Straftaten präventiv zu bekämpfen und/oder zu ermitteln und nachzuweisen. Dabei erfolgt zunächst eine passive Aufschaltung auf wenigstens eine zu überwachende digitale bidirektionale Sprach- und/oder Datennetzverbindung durch eine Überwachungsvorrichtung und sodann eine Auswahl und Lokalisierung von Protokollen und/oder Daten. Die relevanten Daten werden durch eine Aufbereitungsvorrichtung dupliziert und anschließend auf herkömmliche Weise kodiert bzw. verschlüsselt sowie gegebenenfalls mit Fehldaten versehen, anschließend über ein Transitnetz und gegebenenfalls durch einen Sicherheitstunnel an die Empfängerseite übertragen, um schließlich wieder auf herkömmliche Weise dekodiert bzw. entschlüsselt zu werden. Die Sicherheit bei der Übertragung soll somit durch Ver- und Entschlüsselung der relevanten Daten gewährleistet werden.

Weiterhin ist aus der WO 00/27101 ein Verfahren und eine Anordnung zur Überwachung drahtloser Sprachverbindungen bekannt, bei welchem/welcher keine nach Sende- und Empfangsdaten getrennte Übertragung der ausgelesenen Daten, d.h. von der Sendevorrichtung über mehrere unterschiedliche Transitnetze mit einem oder je nach erforderlicher Bandbreite zwei oder mehr gesonderten Kanälen zu einer Empfangsvorrichtung, erfolgt.

In den WO 98/36548 und WO 01/19036 A1 sind ein Verfahren zur Steuerung der gesetzmäßigen Überwachung des Fernmeldeverkehrs bzw. ein Verfahren zur Übertragung von Überwachungsdaten offenbart.

Bei der TR FÜV handelt es sich schließlich um eine vom Bundesministerium für Wirtschaft und Technologie herausgegebene Technische Richtlinie zur Beschreibung der Anforderungen an die Umsetzung gesetzlicher Maßnahmen zur Überwachung der Telekommunikation, in welcher Voraussetzungen bzw. Rahmen vorgegeben sind, die vom Gesetzgeber für Verfahren und/oder Anordnungen zur Überwachung von Sprach- und/oder Datennetzverbindungen in der Praxis gefordert werden, ohne selbst technische Lösungen zu beschreiben.

Der Erfindung liegt daher die Aufgabe zugrunde, ausgehend vom oben genannten Stand der Technik, ein Verfahren und eine Anordnung zur ortsunabhängigen Überwachung von digitalen Sprach- und/oder Datennetzverbindungen durch Bedarfsträger, zur Verfügung zu stellen, mit welcher sich die obigen Nachteile verhindern lassen, welche mithin konstruktiv besonders einfach, zugleich zuverlässig und sicher gegen Eingriffe durch unbefugte Dritte sowie ausgesprochen kostengünstig ist.

Diese Aufgabe wird in verfahrenstechnischer Hinsicht auf überraschend einfache Weise durch die Merkmale des Anspruchs 1 gelöst.

Demnach ist durch die Ausgestaltung des erfindungsgemäßen Verfahrens zur ortsunabhängigen Überwachung von Sprach- und/oder Datennetzverbindungen durch Bedarfsträger, wie dem Bundeskriminalamt, den Landeskriminalämtern, dem Zollkriminalamt, Verfassungsschutz etc., nach richterlicher Genehmigung ein besonders einfaches, zudem ausgesprochen zuverlässiges Verfahren zur unbemerkten Überwachung insgesamt erreicht. Von ganz besonderem Vorteil für unter anderem den Aspekt des Schutzes gegen unbefugte Kenntnisnahme und/oder Manipulation durch Dritte ist dabei, dass bei dem Verfahren nach der Erfindung stets beide Übertragungseiten (Sende- und Empfangsseite) analysiert, nach entsprechender Filterung kopiert und weitergeleitet werden. Bei der zu überwachenden Verbindung werden sowohl die Sende- als auch die Empfangsdaten entsprechend gekennzeichnet und je nach erforderlicher Bandbreite über ein Transitnetz oder mehrere unterschiedliche Transitnetze mit einem oder je nach erforderlicher Bandbreite zwei oder mehr gesonderten Kanälen zu der Empfangsvorrichtung bzw. an den/die Bedarfsträger übermittelt. Mit anderen Worten findet eine Weiterleitung in Form eines doppelten "Einrichtungsverkehrs" (im Gegensatz zu der sonst üblichen Sende/Empfangsrichtungsbidi-rektionalität bei normalen Kommunikationsprozessen) in Richtung Bedarfsträger statt. Damit einhergehend lässt sich zugleich ein ausgesprochen kostengünstiges Verfahren zur Überwachung einzelner Sprach- und/oder Datennetzverbindungen erhalten, da eine Überwachung gezielt nur an den jeweils erforderlichen Stellen vorgenommen werden kann. Von ganz besonders großer Bedeutung für eine ausgesprochen sichere, von außen nicht manipulierbare und/oder gegen unbefugte/n Eingriff in bzw. Kenntnisnahme von Informationen geschützte Übertragung werden die Daten von den Ereignissen und/oder Ereignisfolgen, und umgekehrt, getrennt über das wenigstens eine Transitnetz mit mindestens einem Kanal übertragen. Die Übertragung erfolgt insoweit je nach erforderlicher Bandbreite über ein Transitnetz oder mehrere unterschiedliche Transitnetze mit einem oder je nach erforderlicher Bandbreite zwei oder mehr gesonderten Kanälen zu der Empfangsvorrichtung.

Weitere ganz besonders vorteilhafte Einzelheiten des erfindungsgemäßen Verfahrens zur ortsunabhängigen Überwachung von Sprach- und/oder Datennetzverbindungen durch Bedarfsträger sind in den Ansprüchen 2 bis 9 beschrieben.

Die Aufschaltung wird durch eine Interface-Adaption für eine Vielzahl von unterschiedlichen Schnittstellenmodule bzw. Line-Interface-Module (LIMe) vorgenommen.

Für de Aufschaltung werden Schnittstellentypen für Sprachen- und Datennetzverbindungen in Wide Area Networks (WAN), wie v.24, X.21, V.35, V.36, ISDN-S0, ISDN S2M, E1, und/oder in Local Area Networks (LAN), wie Ethernet, Fast Ethernet oder Token Ring, und/oder in Asynchronous Transfer Mode (ATM), wie OC3/STM 1, UTP-5, DS-3, DS-1, E3, E1, TAXI, verwendet.

Bei der Synchronisation wird entsprechend Anspruch 2 vorzugsweise eine Frame- oder Zell-Synchronisation auf beliebige Datenübertragungsprotokolle vorgenommen. In vorteilhafter Weise wird bei der Frame- oder Zell-Synchronisation nach Anspruch 3 eine Cyclic Redundanz Check (CRC)-/Frame Check-Sequenz (FCS)-Überprüfung zur fehlerfreien Lesbarkeit und/oder Kopierbarkeit von Frames durchgeführt wird.

Bei der Synchronisation wird eine Protokoll-Synchronisation zur Bestimmung einzelner und/oder ineinander verschachtelter Protokolle vorgenommen.

Die Lokalisierung der Protokollschichten wird für die Überwachung gemäß ISO/OSI 1-7 zur Vorbereitung der Trennung der Protokollinhalte und/oder Daten vorgenommen.

Die zu extrahierenden und zu kopierenden Protokollinhalte und/oder Daten werden zur Extraktion gekennzeichnet und aufbereitet.

Die für die jeweilige Überwachung relevanten Daten, Ereignisse und Ereignisfolgen werden ausgelesen und in einen Speicher der Aufbereitungsvorrichtung zur Vorbereitung für eine Anfügung von Dokumentationshinweisen von gesetzlichen Bestimmungen, insbesondere gemäß der Technischen Richtlinie zur Beschreibung der Anforderungen an die Umsetzung gesetzlicher Maßnahmen zur Überwachung der Telekommunikation (TRFÜV), kopiert.

Die zu übertragenden Daten, Ereignisse und Ereignisfolgen werden mit Dokumentationshinweisen, wie Maßnahmennummern, Übertragungsrichtungen etc., insbesondere gemäß der TRFÜV, versehen.

Die zu übertragenden Daten, Ereignisse und Ereignisfolgen werden mit Zeitstempeln, insbesondere im Nanosekundenbereich, versehen, wobei vorzugsweise die Uhrzeit mittels einer amtlichen Funkuhr eingestellt wird. Die Uhrzeit wird zweckmäßigerweise gemäß DCF77 oder GPS-Standard eingestellt.

Die Daten, Ereignisse und Ereignisfolgen werden taktsynchronisiert und von der Aufbereitungsvorrichtung an die Sendevorrichtung zur Übertragung über das mindestens eine Transitnetz an die Empfangsvorrichtung übergeben.

Nach Anspruch 4 werden die Daten, Ereignisse und Ereignisfolgen von der Aufbereitungsvorrichtung über mindestens ein Transportnetz an eine, räumlich getrennte, Sendevorrichtung zur Übertragung über die Transitnetze an die Empfangsvorrichtung übergeben.

Alternativ dazu liegt es im Rahmen der Erfindung, die Daten, Ereignisse und Ereignisfolgen nach Anspruch 5 von mehreren Aufbereitungsvorrichtungen über wenigstens ein Transportnetz an eine, räumlich getrennte, Sendevorrichtung zur Übertragung über die Transitnetze an die Empfangsvorrichtung zu übergeben.

Des Weiteren ist erfindungsgemäß vorgesehen, dass die Daten nach Anspruch 6 getrennt von den Ereignissen und Ereignisfolgen von der/den Aufbereitungsvorrichtung/en an die Sendevorrichtung zur Übertragung über die Transitnetze an die Empfangsvorrichtung übergeben werden.

Die übergebenen Daten, Ereignisse und Ereignisfolgen werden entsprechend Anspruch 7 von der Sendevorrichtung an die Besonderheiten der Transitnetze nach Sende- und Empfangsdaten, -ereignissen und -ereignisfolgen getrennt angepasst.

Die angepassten Daten, Ereignisse und Ereignisfolgen werden in einen Speicher der Sendevorrichtung kopiert, mit einem dem mindestens einen Transitnetz zugeordneten Transitprotkoll versehen und/oder mit einer dem mindestens einen Transitnetz zugeordneten Cyclic Redundanz Check (CRC)-/Frame Check-Sequenz (FCS) für die Kanäle versehen.

Von der Sendevorrichtung werden vor und/oder bei Übertragung der Daten, Ereignisse und Ereignisfolgen die Aufnahmebereitschaft der Kanäle im Transitnetz und Flusskontrolle über Folgezähler auf der Ebene 2 gemäß ISO/OSI oder gemäß TCP Protokoll überprüft und gegebenenfalls fehlerbehandelt. Von der Sendevorrichtung wird darüber hinaus eine Authentifizierung der zu der wenigstens einen zu überwachenden Sprach- und/oder Datennetzverbindung eingetragenen Teilnehmernummer und/oder der der Sendevorrichtung zugeordneten Empfangsvorrichtung vorgenommen.

Weiterhin liegt es im Rahmen der Erfindung, dass die Daten nach Anspruch 8 getrennt von den Ereignissen und Ereignisfolgen von der Sendevorrichtung über die Transitnetze an die Empfangsvorrichtung übertragen werden.

Schließlich ist erfindungsgemäß noch vorgesehen, dass die Daten nach Anspruch 9 getrennt von den Ereignissen und Ereignisfolgen von der Sendevorrichtung über die Transitnetze direkt an eine kompatible Empfangsvorrichtung bei einem oder mehreren Bedarfsträgern übertragen werden.

Von der Empfangsvorrichtung werden vor und/oder bei Übertragung der Daten, Ereignisse und Ereignisfolgen die Aufnahmebereitschaft der Kanäle im Transitnetz und Flusskontrolle über Folgezähler auf der Ebene 2 gemäß ISO/OSI oder gemäß TCP Protokoll überprüft und gegebenenfalls fehlerbehandelt. Von der Empfangsvorrichtung wird zudem eine Authentifizierung der zu der wenigstens einen zu überwachenden Sprach- und/oder Datennetzverbindung eingetragenen Teilnehmernummer und/oder der der Empfangsvorrichtung zugeordneten Sendevorrichtung vorgenommen.

Die übertragenen Daten, Ereignisse und Ereignisfolgen werden mittels einer dem mindestens einen Transitnetz zugeordneten Cyclic Redundanz Check (CRC)-/Frame Check Sequenz (FCS) überprüft, von dem dem mindestens einen Transitnetz zugeordneten Transitprotkoll befreit, entsprechend denjenigen der überwachten Sprach- und/oder Datennetzverbindungen um- und/oder rückformatiert und/oder von der Empfangsvorrichtung an eine Einrichtung des Bedarfsträgers zu deren Weiterbe- bzw. verarbeitung bzw. Auswertung weitergeleitet.

Die Aufbereitungsvorrichtung und/oder die Sendevorrichtung und/oder die Empfangsvorrichtung werden durch wenigstens ein Konfigurationsmodul über einen Personalcomputer eingestellt und gesteuert.

Diese Aufgabe wird weiterhin in anordnungstechnischer Hinsicht auf überraschend einfache Weise gelöst. Demnach ist eine Anordnung zur ortsunabhängigen Überwachung von Sprach- und/oder Datennetzverbindungen durch Bedarfsträger, wie dem Bundeskriminalamt, den Landeskriminalämtern, dem Zollkriminalamt, Verfassungsschutz etc., nach richterlicher Genehmigung, vorgesehen, umfassend eine Aufbereitungsvorrichtung mit einer Einrichtung zur passiven Aufschaltung auf wenigstens eine zu überwachende bidirektionale Sprach- und/oder Datennetzverbindung, einer Einrichtung zur Synchronisation auf Datenübertragungsprotokolle, Datenframes, Datenpaketen und Datenzellen, einer Einrichtung zur Auswahl, Lokalisierung und Trennung von synchronisierten Protokollen und/oder Daten, wobei die Einrichtung zur Auswahl von synchronisierten Protokollen und/oder Daten ein Element zur Filterung zur Bestimmung von zu dekodierenden, synchronisierten Protokollen und aus ausgewählten Protokollschichten zu extrahierenden und zu kopierenden Daten aufweist, und einer Einrichtung zum Auslesen und Übergeben der für die Überwachung relevanten Daten, Ereignisse und Ereignisfolgen, eine mit der Aufbereitungsvorrichtung verbundene Sendevorrichtung und eine wiederum mit der Sendevorrichtung kommunizierende Empfangsvorrichtung zur nach Sende- und Empfangsdaten, -ereignissen und -ereignisfolgen getrennten Übertragung der ausgelesenen Daten, Ereignisse und Ereignisfolgen von der Sendevorrichtung über mehrere unterschiedliche Transitnetze mit einem oder je nach erforderlicher Bandbreite zwei oder mehr gesonderten Kanälen zu der Empfangsvorrichtung zur Aufbereitung und Zusammenführung der getrennt übertragenen Daten, Ereignisse und Ereignisfolgen an einem für deren Auswertung vorgesehenen Ort, wobei die Sendevorrichtung und die Empfangsvorrichtung eine Einrichtung zur Bitratenadaption aufweisen. Neben den vorgenannten Vorteilen handelt es sich bei der erfindungsgemäßen Anordnung zur Überwachung um eine sogenannte reine Beistell-Lösung, die konstruktiv besonders einfach ist und als sogenannte "Black Box" schnell sowie variabel an beliebiger Stelle einsetzbar ist. Die Anordnung nach der Erfindung ist somit kein fester Bestandteil des bzw. der Netzknoten. In diesem Zusammenhang ist von besonderem Vorteil, dass sämtliche Komponenten der erfindungsgemäßen Anordnung unabhängig vom jeweils eingesetzten Netzknoten der verschiedenen Hersteller arbeiten. Zudem handelt es sich bei der erfindungsgemäßen Anordnung zur standortunabhängigen Überwachung von Sprach- und/oder Datennetzverbindungen um die bisher einzige Anordnung, die vom Bundesministerium für Wirtschaft und Technologie nach Überprüfung auf der Grundlage der Fernmeldeverkehr-Überwachungs-Verordnung (FÜV) und der Technischen Richtlinie zur Beschreibung der Anforderungen an die Umsetzung gesetzlicher Maßnahmen zur Überwachung der Telekommunikation (TRFÜV) zugelassen wurde.

Die Aufbereitungsvorrichtung umfasst eine Einrichtung zur Aufschaltung mit einer Vielzahl von unterschiedlichen Schnittstellenmodulen bzw. Line-Interface-Modulen (LIMen).

Die Einrichtung zur Aufschaltung umfasst Schnittstellentypen für Sprachen- und Datennetzverbindungen in Wide Area Networks (WAN), wie V.24, X.21, V.35, V.36, ISDN-S0, ISDN S2M, E1, und/oder in Local Area Networks (LAN), wie Ethernet, Fast Ethernet oder Token Ring, und/oder in Asynchronous Transfer Mode (ATM), wie OC3/STM 1, UTP-5, DS-3, DS-1, E3, E1, TAXI,.

Die Einrichtung zur Synchronisation umfasst ein Element zur Frame- und Zell-Synchronisation auf beliebige Datenübertragungsprotokolle.

Das Element zur Frame-Synchronisation weist eine Cyclic Redundanz Check (CRC)-/Frame Check-Sequenz (FCS)-Einrichtung zur Überprüfung einer fehlerfreien Lesbarkeit und/oder Kopierbarkeit von Frames, Paketen und Zellen auf.

Die Einrichtung zur Synchronisation umfasst ein Element zur Protokoll-Synchronisation zur Bestimmung einzelner und/oder ineinander verschachtelter Protokolle.

Die Einrichtung zur Lokalisierung weist ein Element zur Lokalisierung von Protokollschichten gemäß ISO/OSI 1-7 zur Vorbereitung der Trennung der Protokollinhalte und/oder Daten auf.

Es ist eine Einrichtung zur Kennzeichnung und Aufbereitung der zu extrahierenden und zu kopierenden Protokollinhalte und/oder Daten vorgesehen.

Die Aufbereitungsvorrichtung umfasst einen Speicher zur Abspeicherung der ausgelesenen, für die jeweilige Überwachung relevanten Daten, Ereignisse und Ereignisfolgen.

Die Aufbereitungsvorrichtung umfasst eine Einrichtung zur Anfügung von Dokumentationsinhalten von gesetzlichen Bestimmungen, wie Maßnahmennummern, Übertragungsrichtungen etc., insbesondere gemäß der Technischen Richtlinie zur Beschreibung der Anforderungen an die Umsetzung gesetzlicher Maßnahmen zur Überwachung der Telekommunikation (TRFÜV).

Die Aufbereitungsvorrichtung weist eine Einrichtung zur Anfügung von Zeitstempeln auf, die vorzugsweise gemäß DCF77 oder GPS-Standard einstellbar ist.

Die Aufbereitungsvorrichtung umfasst eine Einrichtung zur Taktsynchronisation der zu übertragenden Daten, Ereignisse und Ereignisfolgen.

Zwischen der Aufbereitungsvorrichtung und der Sendevorrichtung sind zur Übertragung der Daten, Ereignisse und Ereignisfolgen über das mindestens eine Transitnetz an die Empfangsvorrichtung Schnittstellen vom Typ X.21 oder Ethernet angeordnet.

Die Sendevorrichtung umfasst eine Einrichtung zur Anpassung der übergebenen Daten, Ereignisse und Ereignisfolgen an die Besonderheiten des mindestens einen Transitnetzes.

Die Sendevorrichtung weist einen Speicher zur Pufferung von angepassten Daten, Ereignisse und Ereignisfolgen auf.

Die Sendevorrichtung ist mit einer Einrichtung zur Erstellung eines Transitprotokolls für die Kanäle und zur Zuordnung dessen zu den zu übertragenden Daten, Ereignissen und Ereignisfolgen versehen.

Die Sendevorrichtung ist mit einer dem mindestens einen Transitnetz zugeordneten Cyclic Redundanz Check (CRC)-/Frame Check-Sequenz (FCS)-Einrichtung für die Kanäle zur Überprüfung der gespeicherten Daten, Ereignisse und Ereignisfolgen versehen.

Die Sendevorrichtung weist eine Einrichtung zur Überprüfung der Aufnahmebereitschaft der Kanäle im Transitnetz und Flusskontrolle über Folgezähler auf der Ebene 2 gemäß ISO/OSI oder gemäß TCP Protokolls vor und/oder bei Übertragung der Daten, Ereignisse und Ereignisfolgen und zur Fehlerbehandlung auf.

Die Sendevorrichtung weist eine Einrichtung zur Authentifizierung der zu der wenigstens einen zu überwachenden Sprach- und/oder Datennetzverbindung eingetragenen Teilnehmernummer und/oder der der Sendevorrichtung zugeordneten Empfangsvorrichtung auf.

Die Empfangsvorrichtung umfasst eine Einrichtung zur Überprüfung der Aufnahmebereitschaft der Kanäle im Transitnetz und Flusskontrolle über Folgezähler auf der Ebene 2 gemäß ISO/OSI oder gemäß TCP Protokolls von der Empfangsvorrichtung vor und/oder bei Übertragung der Daten, Ereignisse und Ereignisfolgen und zur Fehlerbehandlung.

Die Empfangsvorrichtung weist eine Einrichtung zur Authentifizierung der zu der wenigstens einen zu überwachenden Sprach- und/oder Datennetzverbindung eingetragenen Teilnehmernummer und/oder der der Empfangsvorrichtung zugeordneten Sendevorrichtung auf.

Die Empfangsvorrichtung ist mit einer dem mindestens einen Transitnetz zugeordneten Cyclic Redundanz Check (CRC)-/Frame Check Sequenz (FCS)-Einrichtung für die Kanäle zur Überprüfung der übertragenen Daten, Ereignisse und Ereignisfolgen versehen.

Die Empfangsvorrichtung ist mit einer Einrichtung zur Entfernung des Transitprotokolls für die Kanäle und zur Zuordnung dessen zu den übertragenen Daten, Ereignissen und Ereignisfolgen versehen.

Die Empfangsvorrichtung umfasst eine Einrichtung zur Um- und/oder Rückformatierung der übertragenen Daten, Ereignisse und Ereignisfolgen entsprechend denjenigen der überwachten Sprach- und/oder Datennetzverbindungen.

Die Aufbereitungsvorrichtung und/oder die Sendevorrichtung und/oder die Empfangsvorrichtung umfasst/umfassen wenigstens ein Konfigurationsmodul zur einzelnen oder gemeinsamen Einstellung und Steuerung über einen Personalcomputer.

Weitere Merkmale, Vorteile und Einzelheiten der Erfindung ergeben sich aus der nachfolgenden Beschreibung einer bevorzugten Ausführungsform der Erfindung sowie anhand der Zeichnungen. Hierbei zeigen:
- Fig. 1: ein schematisches Blockdiagramm einer erfindungsgemäßen Ausführungsform einer Anordnung zur ortsunabhängigen Überwachung von Sprach- und/oder Datennetzverbindungen durch Bedarfsträger nach der Erfindung,
- Fig. 2: ein schematisches Blockdiagramm der erfindungsgemäßen Ausführungsform der Anordnung zur ortsunabhängigen Überwachung von Sprach- und/oder Datennetzverbindungen nach der Erfindung entsprechend der Fig. 1 in größerem Detail,
- Fig. 3: ein schematisches Blockdiagramm einer erfindungsgemäßen Ausführungsform einer Aufbereitungsvorrichtung der erfindungsgemäßen Anordnung zur ortsunabhängigen Überwachung von Sprach- und/oder Datennetzverbindungen nach den Fig. 1 und 2,
- Fig. 4: ein schematisches Blockdiagramm einer erfindungsgemäßen Ausführungsform einer Sendevorrichtung der erfindungsgemäßen Anordnung zur ortsunabhängigen Überwachung von Sprach- und/oder Datennetzverbindungen nach den Fig. 1 und 2, und
- Fig. 5: ein schematisches Blockdiagramm einer erfindungsgemäßen Ausführungsform einer Empfangsvorrichtung der erfindungsgemäßen Anordnung zur ortsunabhängigen Überwachung von Sprach- und/oder Datennetzverbindungen nach den Fig. 1 und 2.

Bei der nachfolgenden Beschreibung einer Ausführungsform der erfindungsgemäßen Anordnung 10 zur ortsunabhängigen Überwachung von Sprach- und/oder Datennetzverbindungen durch Bedarfsträger nach der Erfindung sind einander entsprechende, gleiche Bauteile jeweils mit identischen Bezugsziffern versehen.

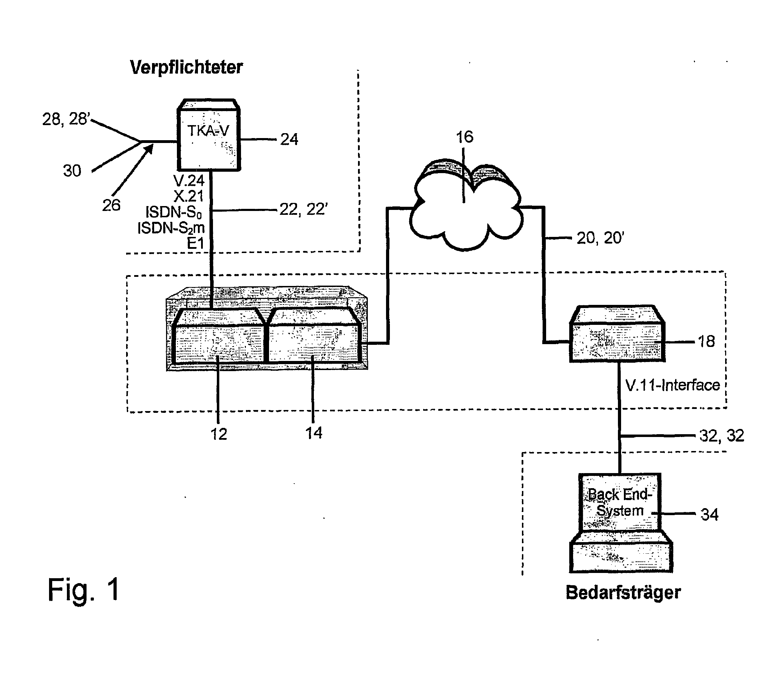

Wie aus der Fig. 1 hervorgeht umfasst die erfindungsgemäße Anordnung 10 eine Aufbereitungsvorrichtung 12, eine Sendevorrichtung 14 und eine mit der Sendevorrichtung 14 über wenigstens ein Transitnetz 16 kommunizierende und zusammenwirkende Empfangsvorrichtung 18. Ungeachtet dessen können in entsprechender Weise auch mehrere Aufbereitungsvorrichtungen 12 vorgesehen sein.

Ohne im Einzelnen dargestellt zu sein, kann/können dir Aufbereitungsvorrichtung/en 16 über mindestens ein Transportnetz mit einer, insbesondere räumlich getrennten, Sendevorrichtung 14 kommunizieren. Das/die Transportnetz/e ist/sind dabei in aller Regel von dem wenigstens einen Transitnetz 16 unterschiedlich. Denkbar ist jedoch auch, dass zumindest ein Teil des wenigstens einen Transitnetzes als Transportnetz verwendet wird.

Das wenigstens eine Transitnetz 16 weist mindestens einen oder mehrere, bei der dargestellten Ausführungsform zwei, Kanäle 20, 20' auf, über welche die Übertragung von Daten, Ereignissen und Ereignisfolgen zwischen der Sendevorrichtung 14 und der Empfangsvorrichtung 18 stattfindet.

Die Aufbereitungsvorrichtung 12 ist über ebenfalls wenigstens zwei Kanäle (Senden und Empfang) 22, 22' mit einer Telekommunikationsanlage 24 eines Verpflichteten, beispielsweise eines Carriers oder Internet-Providers, verbunden. Die Telekommunikationsanlage 24 umfasst wiederum wenigstens eine, meist jedoch viele, zu überwachende Sprach- und/oder Datennetzverbindung 26 mit ebenfalls wenigstens zwei Kanälen 28, 28', die zu dem zu überwachenden Anschluss 30 führen.

Die Empfangsvorrichtung 18 ist über ebenfalls wenigstens einen oder mehrere, bei der gezeigten Ausführungsform zwei, Kanäle 32, 32' mit einem Back End-System 34, zum Beispiel einem Aufzeichnungs- und Wiedergabegerät, einem speziellem Analysator oder einem prozessgesteuerten Nachbearbeitungssystem oder dergleichen, eines oder mehrerer Bedarfsträger, wie dem Bundeskriminalamt, den Landeskriminalämtern, dem Zollkriminalamt, Verfassungsschutz etc. verbunden.

Je nach Anforderung der Bedarfsträger können die für die Überwachung relevanten Ereignisse und Ereignisfolgen getrennt von den Daten gleichzeitig über unterschiedliche Transitnetze übertragen werden. So kann zum Beispiel die Übertragung der Sende- und Empfangsdaten über das ISDN, die Übertragung der Ereignisse und Ereignisfolgen über ein X.25 Netz zum Bedarfsträger erfolgen.

Mithin besteht die Anordnung 10 nach der Erfindung im wesentlichen aus drei Bestandteilen, nämlich der Aufbereitungsvorrichtung 12, der Sendevorrichtung 14 und der Empfangsvorrichtung 18, deren Aufgaben und Funktionsweisen sich wie folgt zusammenfassen lassen. Die entsprechenden Bauteile werden im Anschluss daran näher erläutert.

Die Aufbereitungsanordnung 12 wird hochohmig und passiv sowie unbemerkt an die Schnittstelle angeschaltet, über die die Telekommunikation des zu überwachenden Anschlusses 30 geführt wird.

Sie erkennt die zu überwachende Telekommunikation unabhängig vom Typ des zu überwachenden Anschlusses 30 und fertigt eine Kopie dieser Telekommunikation an. Die Aufbereitungsanordnung 12 reicht die Kopie der zu überwachenden Telekommunikation an die weitervermittelnde Sendevorrichtung 14 weiter.

Taktdifferenzen zwischen dem zu überwachenden Anschluss 30 und dem Transitnetz 16 gleicht die Sendevorrichtung 14 durch einen elastischen Buffer aus. Dieser elastische Buffer, zusammen mit einer Taktrückgewinnung in der Empfangsvorrichtung 18, ermöglicht für eine begrenzte Zeit die Überwachung von Telekommunikationsanschlüssen, deren Taktrate höher als die Taktrate des Transitnetzes ist. In gleicher Weise ist es jedoch ebenso möglich, dass deren Taktrate gleich oder kleiner ist als die Taktrate des Transitnetzes.

Die Aufbereitungsanordnung 12 ist mit Hilfe der zahlreichen verfügbaren Interface-Modulen und der nachgeschalteten Einrichtungen in der Lage sich in eine beliebige Datenkommunikation (Frame-Strukturen, Protokollstrukturen, sonstige Inhalte) einzusynchronisieren.

Danach beginnt ein sogenannter Capture-Prozess in den Speicher der Aufbereitungsvorrichtung 12. Parallel dazu können mittels einfacher miteinander verknüpfbarer Extraktionsanweisungen beliebige Informationsinhalte zuerst gefiltert und anschließend extrahiert werden. Eine solche Filterung bietet sich an, um nur wichtige Ereignisse zu extrahieren und zu übermitteln, dient aber vor allem der Wahrung des Fernmeldegeheimnisses, so dass nur die von einer gesetzlich erlaubten Überwachungsmaßnahme betroffene Telekommunikation herausgefiltert wird.

Die Kopie dieser an einen oder mehrere Bedarfsträger (BKA, LKA, ZKA etc.) zu übermittelnden Inhalte wird mit exakten Zeitstempeln und weiteren Informationen (wie zum Beispiel in der TRFÜV vorgeschrieben) versehen (Ereignis, Sende- und Empfangsinformationen der Datenverbindung) und an die Sendevorrichtung 14 weitergeleitet.

Die Aufgaben der Aufbereitungsanordnung 12 kann man also grob wie folgt zusammenfassen: Interface-Adaption/Aufschaltung auf eine Vielzahl von Interfaces von Datenleitungen (WAN/LAN/ATM), Synchronisation auf Datenframes, Zellen und Pakete, Capturing von Protokollen und Daten, Erkennung und Dekodierung einer großen Anzahl von unterschiedlichen Übertragungsprotokollen und deren Varianten), Triggerung auf beliebige Ereignisse und Ereignisfolgen, Filterung beliebiger Inhalte von Protokollen und Daten, Extraktion der relevanten Telekommunikation, Kopieren von ungefilterten oder gefilterten Datenströmen in den Buffer der Aufbereitungsvorrichtung 12, Einfügen von Ereignisdaten, Ereignisfolgen, Dokumentation für die eindeutige Zuordnung zur Datenquelle, Einfügen von Zeitstempeln für die Beweisführung (zum Beispiel DCF-77 Zeit oder optional nach dem GPS-Standard), Takt-Synchronisierung/-Resynchronisierung und Weiterleitung der Sende- und Empfangsdaten an die Sendevorrichtung 14.

Die Sendevorrichtung 14 übernimmt an Ihren Eingängen (Sende- und Empfangsinformationen) die Daten von der Aufbereitungsvorrichtung 12.

Die Sendevorrichtung 14 nimmt die Anpassung an unterschiedliche Netztopologien der Transitnetze 16 und die Authentifizierung vor.

Aufgabe der Sendevorrichtung 14 besteht dabei weiterhin darin, die Daten so zu segmentieren, dass ein Transport über ein Transitnetz 16 gewährleistet ist.

Die Sendevorrichtung 14 übermittelt die zu überwachende Telekommunikation über wenigstens ein Transitnetz 16 an die Empfangsvorrichtung 18, die in räumlicher Nähe zu der Aufzeichnungseinrichtung oder dergleichen Back End-System 34 des Bedarfsträgers zu installieren ist. Die Sendevorrichtung 14 steuert und überwacht den Aufbau/Abbau der Wählverbindungen im Transitnetz 16.

Die Übergabe an ein Transitnetz 16 erfolgt bei Festverbindungen kontinuierlich. Bei Wählnetzen wird nur und stets dann, wenn die Aufbereitungsvorrichtung 12 Daten zur Überspielung bereitstellt, eine Verbindung neu aufgebaut und danach wieder abgebaut.

Nach dem Verbindungsaufbau erfolgt eine Authentifizierung mit der auf der anderen Seite vorhandenen Empfangsvorrichtung 18.

Darüber hinaus werden alle gesetzlich geforderten Fähigkeiten wie das Handling von Closed User Groups (CUG) in den Wählnetzen, wie zum Beispiel ISDN, unterstützt.

Ist die Geschwindigkeit der überwachten Verbindung anders als die Geschwindigkeit der Transitverbindungen 16, übernimmt die Sendevorrichtung 14 und die Empfangsvorrichtung 18 auch noch die Bitratenadaption.

Die Sendevorrichtung 14 übernimmt damit unter anderem folgende Aufgaben: Handling von Transitnetzen 16 inklusive der Umformatierung der Datenströme zur Weiterleitung über das Transitnetz 16 in ein für das Transitnetz 16 geeignetes Format, Authentifizierung und Bitratenadaption.

Auf der anderen Seite des Transitnetzes 16, also auf der Seite des/der Bedarfsträger, zum Beispiel dem BKA, LKA, ZKA etc., ist eine Empfangsvorrichtung 18 installiert.

Die Empfangsvorrichtung 18 übernimmt die über das Transitnetz 16 übermittelten Daten der Sendevorrichtung 14 und übernimmt auf ihrer Seite das komplette Handling des Transitnetzes 16 inklusive einer Authentifizierung mit der Sendevorrichtung 14, einer Resegmentierung, der Unterstützung von gesetzlich geforderten Closed User Group-Funktionen sowie einer Bitratenadaption, falls erforderlich.

Am Ausgang der Empfangsvorrichtung 18 steht an einer Standardschnittstelle (zum Beispiel V.11) die Kopie einer relevanten Telekommunikation für den Bedarfsträger einschließlich zusätzlicher Informationen, wie sie die TRFÜV vorschreibt, und genauer Zeitstempel zur Verfügung. Diese kann mit beliebigen Back End-Systemen 34 wie Aufzeichnungsgeräten, Nachbearbeitungsgeräten etc. beobachtet und/oder weiterverarbeitet werden.

Daneben ist durch das Einbeziehen der Anschlüsse bzw. Kanäle 20, 20' des Transitnetzes 16 sowohl auf Seite der Sendevorrichtung 14 als auch auf Seite der Empfangsvorrichtung 18 in die für Überwachungszwecke eingerichtete Closed User Group (CUG) sowie durch Überprüfung der Calling Party Number ein zusätzlicher, ausgesprochen wirkungsvoller Schutz vor Blockade und vor nicht autorisierter Informationsübermittlung gewährleistet.

Die Empfangsvorrichtung 18 übernimmt unter anderem folgende Aufgaben: Steuerung und Überwachung der Kommunikation mit der Sendevorrichtung 14, Darstellung der zu überwachenden Telekommunikationsanlage 24 in der Form, wie sie der zu überwachende Anschluss 30 in Verbindung mit dem Back End-System 34, wie beispielsweise einem entsprechenden Monitor oder Aufzeichnungsgerät, sendet oder empfängt.

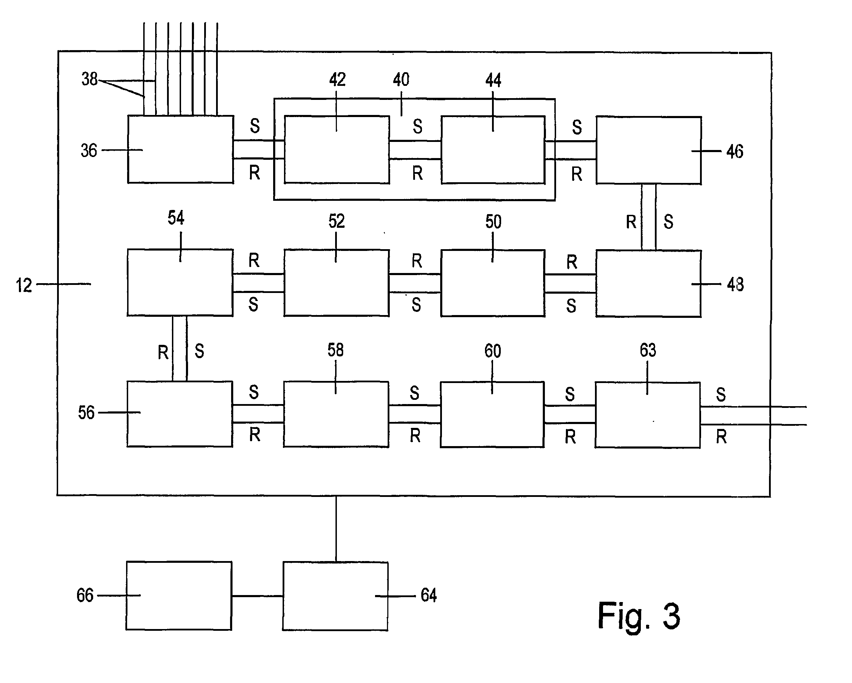

Im folgenden wird der Aufbau der Aufbereitungsvorrichtung 12, der Sendevorrichtung 14 und der Empfangsvorrichtung 18 unter Bezugnahme auf die Fig. 3 bis 5 im Detail beschrieben.

Die Aufbereitungsvorrichtung 12 der erfindungsgemäßen Anordnung 10 umfasst entsprechend der Fig. 3 eine Einrichtung 36 zur Aufschaltung mit einer Vielzahl von unterschiedlichen Schnittstellenmodulen 38 bzw. Line-Interface-Modulen (LIMen), die für gesetzliche Überwachungsmaßnahmen hochohmig, passiv und unbemerkt auf Sprachen- und/oder Datenverbindungen 26 aufgeschaltet werden. In der Aufbereitungsvorrichtung 12 sind vorzugsweise bis zu 10 solcher verschiedener Interfaces 38 beliebigen Typs angeordnet.

Die Einrichtung 36 zur Aufschaltung ist aus unterschiedlichen Schnittstellentypen für Sprachen- und Datennetzverbindungen 26 in Wide Area Networks (WAN), wie V.24, X.21, V.35, V.36, ISDN-S0, ISDN S2M, E1, und/oder in Local Area Networks (LAN), wie Ethernet, Fast Ethernet oder Token Ring, und/oder in Asynchronous Transfer Mode (ATM), wie OC3/STM 1, UTP-5, DS-3, DS-1, E3, E1, TAXI, gebildet.

Der Einrichtung 36 zur Aufschaltung ist eine Einrichtung 40 zur Synchronisation nachgeschaltet. Die Einrichtung 40 zur Synchronisation besteht aus einem Element 42 zur Frame- oder Zell-Synchronisation auf beliebige Datenübertragungsprotokolle, zum Beispiel im WAN, LAN oder ATM. Das Element 42 zur Frame- oder Zell-Synchronisation kann dabei eine Cyclic Redundanz Check (CRC)-/Frame Check-Sequenz (FCS)-Einrichtung (nicht gezeigt) aufweisen, um Frames bzw. Bitfolgen fehlerfrei lesen und/oder kopieren zu können.

Des weiteren ist die Einrichtung 40 zur Synchronisation mit einem Element 44 zur Protokoll-Synchronisation versehen. Mit der Protokollsynchronisation wird festgestellt, welche WAN/LAN/ATM-Protokolle sich einzeln oder ineinander verschachtelt (encapsulated) in den Frames befinden. Nur so kann ein Capture-Prozess für die Überwachung mit einer Protokolldekodierung zur klaren Protokoll- und Ereignisdefinition und zur Feststellung der Offset-Adressen für die Nutzdatenpositionen stattfinden.

Die Aufbereitungsvorrichtung 12 umfasst weiterhin eine Einrichtung 46 zur Auswahl von synchronisierten Protokollen und/oder Daten mit einem Element zur Filterung, einem sogenannten Capture-Filter. Abhängig davon, um welche Überwachungsmaßnahme es sich handelt, wird hier entschieden, welche der aussynchronisierten Protokolle dekodiert werden und auch welche Nutzdaten aus welchen Protokollschichten extrahiert und kopiert werden.

Für die Erkennung der zu überwachenden Telekommunikationsanlage 24 können geeignete Filter definiert werden. Dies ist notwendig, wenn an der Schnittstelle, an welche die Aufbereitungsvorrichtung 12 angeschaltet wird, die Telekommunikation mehrerer Teilnehmer übertragen wird. Der/die Filter stellt/stellen sicher, dass nur die Telekommunikation des in der Überwachungsanordnung genannten Anschlusses zum Bedarfsträger übermittelt wird. Dies hat den Nebeneffekt, dass für die Übermittlung der zu überwachenden Telekommunikationsanlage 24 im Transitnetz 16 nur die dafür erforderliche Minimal-Bandbreite beansprucht wird.

### Folgende Filter können dabei insbesondere verwendet werden:

Bei X.25-Festverbindungen (PVC) Filter auf logischer Kanalnummer (LCN), bei X.25-Wählverbindungen (SVC) Filter auf X.25 Nummer, bei Frame Relay Filter auf Data Link Connection Identifier (DLCI), bei ISDN-Wählverbindungen Filter auf Teilnehmernummer (MSN) und bei E1-Verbindungen Filter auf einem oder mehreren Zeitschlitz/en, bei ATM PVC auf die Kanalnummer (VPI+VCI), bei ATM SVC auf die Teilnehmernummer gemäß Signalisierungsprotokoll, bei TCP/IP auf die IP Adresse und gegebenenfalls noch die TCP Port Nummer. Beliebige andere Filter- und Filterkombinationen auf Protokoll- oder Nutzdaten-Ebenen, auch miteinander verknüpfbar, können gleichermaßen als Element zur Filterung verwendet werden.

Entsprechend der Fig. 3 ist bei der Aufbereitungsvorrichtung 12 eine Einrichtung 48 zur Lokalisierung bzw. Protokolldekodierung mit einem Element zur Lokalisierung von Protokollschichten gemäß ISO/OSI 1-7 als Vorbereitung für die Trennung der Protokollinhalte und/oder Nutzdaten vorgesehen.

Die Aufbereitungsvorrichtung 12 weist darüber hinaus eine Einrichtung 50 zur Kennzeichnung und Aufbereitung der zu extrahierenden und zu kopierenden Protokollinhalte und/oder Daten bzw. Nutzdaten auf. Gemäß der Entscheidungen in der Einrichtung 46 werden die zu kopierenden Informationen zur Extraktion gekennzeichnet und vorbereitet bzw. getrennt und markiert.

In der Einrichtung 52 zur Extraktion der Daten, Ereignisse und Ereignisfolgen werden die für die jeweilige Überwachung relevanten Daten, Ereignisse und Ereignisfolgen herausgelesen.

Die Aufbereitungsvorrichtung 12 umfasst einen Speicher 54 zur Abspeicherung der ausgelesenen, für die jeweilige Überwachung relevanten Daten, Ereignisse und Ereignisfolgen. In den Übergabebuffer 54 wird als Vorbereitung für die Anfügung von Dokumentationsinhalten, die gesetzlich in der TRFÜV (technische Richtlinie zur Beschreibung der Anforderungen an die Umsetzung gesetzlicher Maßnahmen zur Überwachung der Telekommunikation) vorgesehen sind, eine Kopie angefertigt.

Die Aufbereitungsvorrichtung 12 umfasst eine Einrichtung 56 zur Anfügung von Dokumentationsinhalten von gesetzlichen Bestimmungen, wie Maßnahmennummern, Übertragungsrichtungen etc., insbesondere gemäß der Technischen Richtlinie zur Beschreibung der Anforderungen an die Umsetzung gesetzlicher Maßnahmen zur Überwachung der Telekommunikation (TRFÜV), und eine Einrichtung 58 zur Anfügung von Zeitstempeln, die vorzugsweise mittels einer amtlichen Uhr nach DCF-77 oder optional nach dem GPS-Standard einstellbar ist.

Zusätzlich ist die Aufbereitungsvorrichtung 12 mit einer Einrichtung 60 zur Taktsynchronisation der Kanäle für die zu übertragenden Daten, Ereignisse und Ereignisfolgen versehen, falls die Situation (Jitter etc.) es erfordert.

Schließlich sind zwischen der Aufbereitungsvorrichtung 12 und der Sendevorrichtung 14 zur Übertragung der Kanäle bzw. Daten, Ereignisse und Ereignisfolgen über das mindestens eine Transitnetz 16 an die Empfangsvorrichtung 18 die Schnittstellen 62 zum Beispiel vom Typ X.21 oder Ethernet angeordnet.

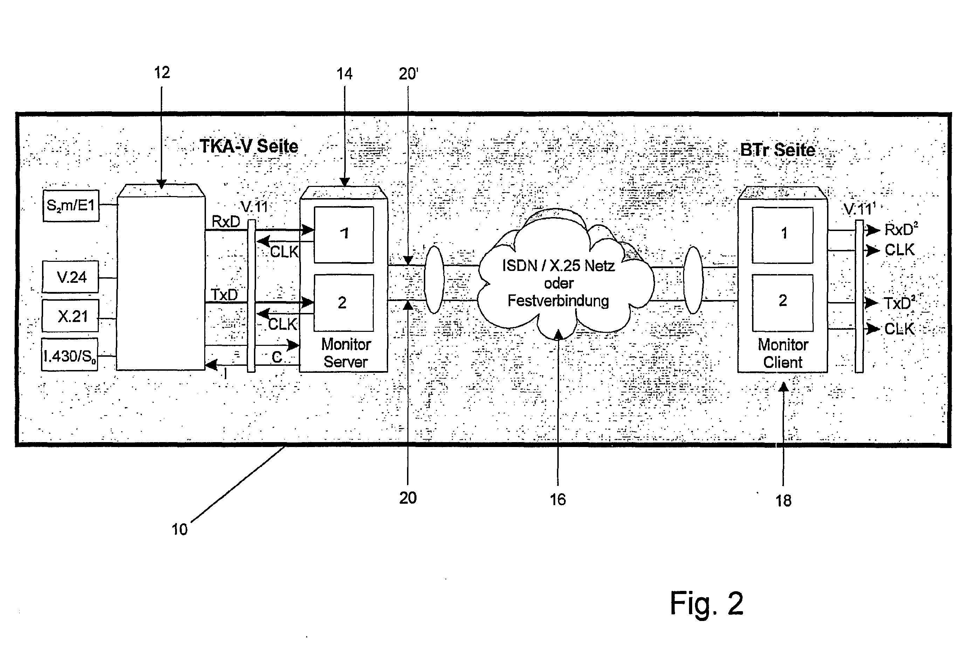

Mittels eines Konfigurationsmoduls 64, auf das über einen Control-Personal-Computer 66 zugegriffen werden kann, welcher auch die Aufbereitungsvorrichtung 12 und die Sendevorrichtung 14 konfiguriert, lassen sich die Einrichtungen bzw. Elemente 36 bis 62 einstellen und/oder steuern bzw. überwachen. Die diversen Managementschnittstellen entsprechend der Fig. 2 zwischen dem Control-Personal-Computer 66 und den einzelnen Modulen wurden in der Fig. 3 aus Gründen der Übersichtlichkeit nicht im Einzelnen dargestellt.

Insbesondere die Schnittstelle 62 erlaubt eine räumlich getrennte Anordnung zwischen Aufbereitungsvorrichtung 12 Sendevorrichtung 14. Je nach den gegebenen Erfordernissen kann diese Schnittstelle über eine große (räumliche) Entfernung innerhalb des zu überwachenden Netzes geführt werden.

Bei dieser Konfiguration ist als besondere Variante der gesamten Anordnung der Betrieb von einer Sendevorrichtung 14 mit mehreren Aufbereitungsvorrichtungen 12 gleichzeitig möglich.

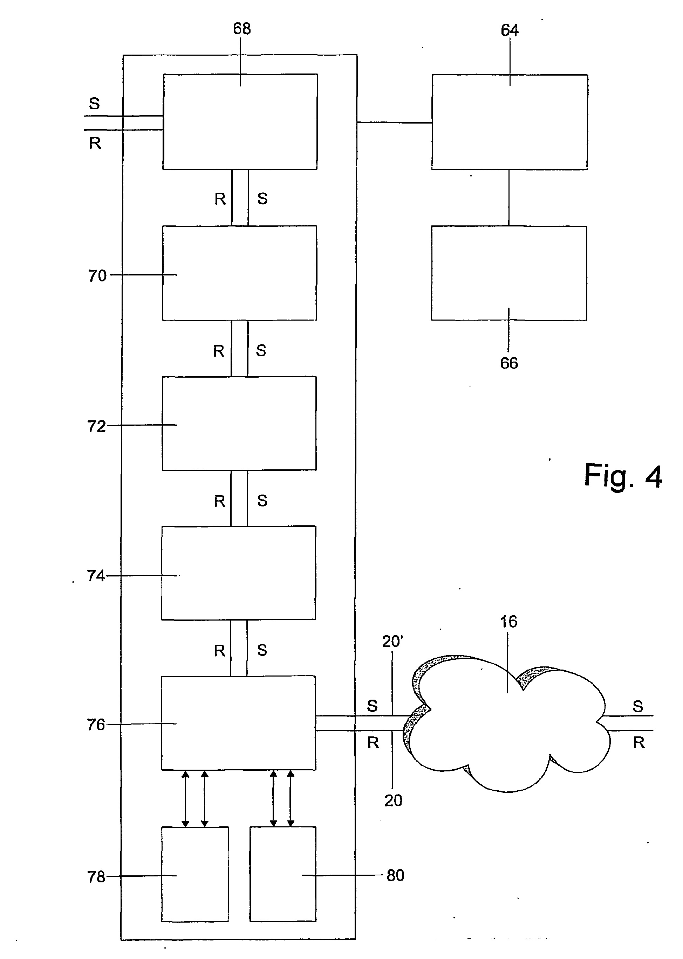

Wie die Fig. 4 zeigt, umfasst die Sendevorrichtung 14 eine Einrichtung 68 zur Anpassung der übergebenen Daten, Ereignisse und Ereignisfolgen an die Besonderheiten des mindestens einen Transitnetzes 16. Insbesondere dient die Einrichtung 68 dem Reassembly/Assembly der Frames, nämlich der Prüfung und Zerlegung der empfangenen Frames für die Übertragung über das Transitnetz 16. Gegebenenfalls müssen hier die Frame- und Paketlängen an die Vorschriften, Einschränkungen etc. des Transitnetzes 16 angepasst werden.

Daran anschließend weist die Sendevorrichtung 14 einen Speicher 70 bzw. Bufferbereich zur Abspeicherung von angepassten Daten, Ereignisse und Ereignisfolgen bzw. der so vorbereiteten Frames, Pakete oder Zellen auf.

Die Sendevorrichtung 14 ist entsprechend der Fig. 4 mit einer Einrichtung 72 zur Erstellung eines Transitprotokolls für den Kanal/die Kanäle 20, 20' und zur Zuordnung bzw. Anfügung dessen zu den zu übertragenden Daten, Ereignissen und Ereignisfolgen versehen.

Die Sendevorrichtung 14 ist zudem mit einer dem mindestens einen Transitnetz 16 zugeordneten Cyclic Redundanz Check (CRC)-/Frame Check-Sequenz (FCS)-Einrichtung 74 für den/die Kanäle 20, 20' zur Übertragungssicherung der gespeicherten Daten, Ereignisse und Ereignisfolgen zum Anfügen der im Transitnetz 16 benötigten Framecheck/Framesicherungssequenz (CRC/FCS) versehen.

Weiterhin ist eine Einrichtung 76 zum Handling des/der Transitnetze 16 einschließlich der Feststellung der Aufnahmebereitschaft der Kanäle 20, 20' im Transitnetz 16 und zur Flusskontrolle über Folgezähler auf der Ebene 2 gemäß ISO/OSI vor und/oder bei Übertragung der Daten, Ereignisse und Ereignisfolgen und zur Fehlerbehandlung bei der Sendevorrichtung 14 verwirklicht. Die Einrichtung 76 dient der Übertragungssicherung und einer eindeutigen Authentifikation zwischen der Sendevorrichtung 14 und der Empfangsvorrichtung 18 inklusive der in der TRFÜV geforderten CUG (Closed Usergroup) in Wählnetzen.

Durch die Einrichtung 78 der Sendevorrichtung 14 erfolgt eine Bitdatenadaption, falls die Geschwindigkeit der überwachten Leitung größer oder kleiner ist als die des Transitnetzes 16

Die Sendevorrichtung 14 weist schließlich noch eine Einrichtung 80 zur Authentifizierung der zu der wenigstens einen zu überwachenden Sprach- und/oder Datennetzverbindung 26 eingetragenen Teilnehmernummer und/oder der der Sendevorrichtung 14 zugeordneten Empfangsvorrichtung 18 auf. Die Einrichtung 80 stellt die Funktion Closed User Group (CUG) in Wählnetzen sicher, so dass nur Teilnehmer, die beim Netzwerkbetreiber in der gleichen geschlossenen User Group eingetragen sind, miteinander kommunizieren dürfen. So wird die Beteiligung Dritter über die Identifizierung der Teilnehmerrufnummern ausgeschlossen, wie zum Beispiel in der TRFÜV gefordert.

Zusätzlich identifizieren sich die Sendevorrichtung 14 und die Empfangsvorrichtung 18 der Anordnung 10 eigenständig, um auch bei ausgeschalteter, noch nicht aktivierter oder fehlerhafter CUG einen Missbrauch der Anordnung 10 auszuschließen.

Auf das Konfigurationsmodul 64 kann wiederum mit dem Control-Personal-Computer, der auch die Aufbereitungsvorrichtung 12 kontrolliert, für Änderungen zugegriffen werden. Das Konfigurationmodul 64 kann dann auf die einzelnen Einrichtungen 68 bis 80 zugreifen und notwendige Änderungen vornehmen.

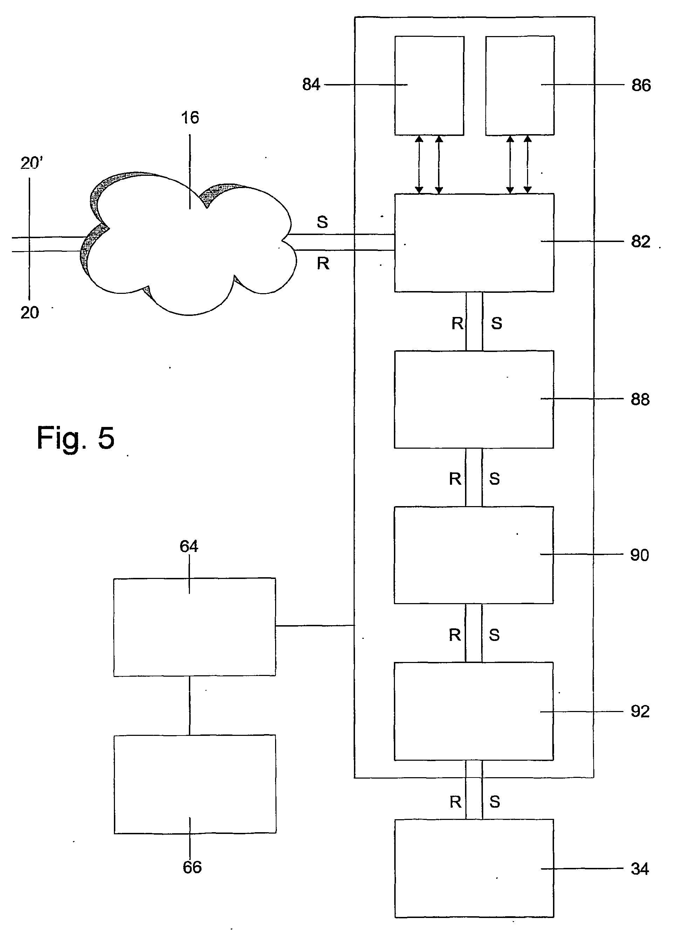

Die Empfangsvorrichtung 18 der Anordnung 10 nach der Erfindung, die in der Fig. 5 gezeigt ist, umfasst eine Einrichtung 82 zur Überprüfung der Aufnahmebereitschaft der Kanäle 20, 20' im Transitnetz 16 und zur Flusskontrolle über Folgezähler auf der Ebene 2 gemäß ISO/OSI von der Empfangsvorrichtung 18 vor und/oder bei Übertragung der Daten, Ereignisse und Ereignisfolgen und zur Fehlerbehandlung. Die Einrichtung 82 dient der Übertragungssicherung und einer eindeutigen Authentifikation zwischen der Sendevorrichtung 14 und der Empfangsvorrichtung 18 inklusive der in der TRFÜV geforderten CUG (Closed Usergroup) in Wählnetzen.

Durch die Einrichtung 84 der Empfangsvorrichtung 18 erfolgt eine Bitdatenadaption, falls die Geschwindigkeit der überwachten Leitung größer oder kleiner ist als die des Transitnetzes 16. Durch die Einrichtung 84 in der Empfangsvorrichtung 18 werden dem Bedarfsträger die ursprünglichen Daten unverändert übergeben.

Die Empfangsvorrichtung 18 weist darüber hinaus eine Einrichtung 86 zur Authentifizierung der zu der wenigstens einen zu überwachenden Sprach- und/oder Datennetzverbindung 26 eingetragenen Teilnehmernummer und/oder der der Empfangsvorrichtung 18 zugeordneten Sendevorrichtung 14 auf. Die Einrichtung 86 stellt die Funktion Closed User Group (CUG) in Wählnetzen sicher, so dass nur Teilnehmer, die beim Netzwerkbetreiber in der gleichen geschlossenen User Group eingetragen sind, miteinander kommunizieren dürfen. So wird die Beteiligung Dritter über die Identifizierung der Teilnehmerrufnummern ausgeschlossen, wie zum Beispiel in der TRFÜV gefordert.

Die Empfangsvorrichtung 18 ist mit einer dem mindestens einen Transitnetz 16 zugeordneten Cyclic Redundanz Check (CRC)-/Frame Check Sequenz (FCS)-Einrichtung 88 für die zwei Kanäle 20, 20' zur Überprüfung der übertragenen Daten, Ereignisse und Ereignisfolgen und einer Einrichtung 90 zur Entfernung des Transitprotokolls für die Kanäle 20, 20'und zur Zuordnung dessen zu den übertragenen Daten, Ereignissen und Ereignisfolgen versehen. Letztere ist vorgesehen, damit an den Bedarfsträger nur eine Kopie der zu überwachenden bzw. überwachten Leitung 26 übergeben werden kann.

Schließlich weist die in der Fig. 5 gezeigte Ausführungsform der Empfangsvorrichtung 16 noch eine Einrichtung 90 zur Um-und/oder Rückformatierung der übertragenen Daten, Ereignisse und Ereignisfolgen entsprechend denjenigen der überwachten Sprach- und/oder Datennetzverbindungen 26 auf. Die Einrichtung 90 zur Assembly/Reassembly nimmt die "Um- und Rückformatierung" aller für die Übertragung über das Transitnetz 16 notwendigen Umformatierungen im Vergleich mit der zu überwachenden Leitung 26 vor.

Auf das Konfigurationsmodul 64 kann wiederum mit dem Control-Personal-Computer 66, der auch die Aufbereitungsvorrichtung 12 kontrolliert, für Änderungen zugegriffen werden. Das Konfigurationsmodul 64 kann dann auf die einzelnen Einrichtungen 82 bis 92 zugreifen und notwendige Änderungen vornehmen.

Im Ergebnis zeichnet sich das Verfahren und die Anordnung nach der Erfindung durch folgende besondere Vorteile auf:
a) Einsetzbarkeit nicht nur an und/oder in bestimmten Netzen/Leitungen mit bestimmten Schnittstellen und Protokollen, sondern modular und flexibel an allen Datenübertragungsnetzen mit niedrigen Geschwindigkeiten von 300 bps bis 64 Kbps über gängige Geschwindigkeiten 9.600 bps, 19.600 bps, 28.800 bps, 57.600 bps usw. bis hinauf zur Aufschaltung der Einrichtung auf Internet-Backbones mit Geschwindigkeiten von 2 Mbps, 34 Mbps, 155 Mbps, 600 Mbps und sogar 2,4 Gbps, wie sie zwischen den Internet Service-Providern eingesetzt werden.
b) Dekodierung einer großen Anzahl von verschiedenen Datenübertragungsprotokollen und deren Varianten.
c) Erkennung von Ereignissen nicht nur auf Schnittstellenebene, sondern auch innerhalb von Protokollen und Nutzdaten, angefangen von der Ebene 1 laut OSI/ISO bis hin zur Ebene 7, also Applikationen und Userdaten.
d) Reaktion nicht nur auf Signale im Netz und gegebenenfalls noch auf Codeworte, sondern beliebige Aktivierbarkeit durch zahlreiche Matches jeder Art, die sogar miteinander verknüpfbar sind.
e) Filterung/Extraktion bestimmter für die gesetzlichen Überwachungsmaßnahmen relevanter Ereignis- und Dateninhalte, unabhängig davon, auf welcher "Ebene" sich die Information im Protokoll und den Nutzdaten befindet.
f) Weiterleitung des Überwachungsergebnisses über unterschiedliche Transitnetze (Festverbindungen, Wählverbindungen, Paketdienste wie X.25, Frame Relay oder TCP/IP).
g) Weiterleitung des Überwachungsergebnisses mittels besonderer Verschlüsselungstechnik an den/die Bedarfsträger auch über das Internet selbst (Bedarfsträger bilden somit ein VPN (virtual privat network).
h) Einfügen von Beschreibungen/Bezeichnungen in den Datenstrom für die Übermittlung an den/die Bedarfsträger zur Eindeutigkeit und zur Beweisführung vor Gericht.
i) Einfügen von eindeutigen Zeitstempeln für die eindeutige Ereignisverfolgung und zur Beweisführung vor Gericht.
j) Sichersstellung der Vertraulichkeit mittels Handling von Closed User Group-Netzdiensten gemäß der gesetzlichen Forderungen und/oder getrennte Übertragung über getrennte Kanäle.

Anhand der beiden nachfolgenden Beispiele 1 und 2 werden das Überwachungsverfahren bzw. die Überwachungsanordnung nach der Erfindung weiter erläutert:

### Beispiel 1

Auf einer Verbindung zwischen einem Netzknoten des Netzwerkanbieters und einem ausgelagertem Netzknoten (zum Beispiel in einem Industriegebiet) auf der Basis einer X.25-Daten-Paketvermittlung soll bei Zustandekommen einer Verbindung mit einer oder zwei bekannten Teilnehmeradressen (Rufende Nr., Gerufene Nr. oder auf beide gerichtet) die nachfolgende Kommunikation herausgefiltert, extrahiert und weitergeleitet werden, weil mit dieser Datenverbindung kriminelle Aktionen vorbereitet werden.

Das erfindungsgemäße Anordnung kann deshalb bei jedem beliebigen Mehrfachprotokollgemisch, wie es bei einer Überleitung LAN/WAN/ATM häufig vorkommt (zum Beispiel Ethernet, ARP, RIP, UTP/TCP, RTCP, Netbios, HDLC, X.25), die Adressmatches auf die Teilnehmeradressen jederzeit realzeitorientiert und ausgesprochen zuverlässig beherrschen, unabhängig von der Netzlast, dann die zugeteilten eindeutigen Prozesszuweisungen, wie den logischen Kanal dieser Telekommunikationsverbindung bei X.25, von Anfang bis Ende nachverfolgen, filtern und zur Weiterleitung extrahieren, einschließlich der Bereitstellung und Vorbereitung für die erforderliche Dokumentation. Eine Kenntnis von Routing- und Switchingtabellen der Netzwerkkomponenten ist somit nicht erforderlich.

### Beispiel 2

Drogenhandel, Waffenhandel oder Kinderpornographie wird über das relativ anonyme Internet getätigt bzw. verbreitet. Da von den ISPn für bestimmte Verbindungen dynamische IP-Adressen verteilt werden, können die Täter nicht über eine eindeutig zuordenbare Adressenfilterung überführt werden.

Die erfindungsgemäße Anordnung kann in diesem Fall realtimeorientiert auf mehreren Internetports oder Internet Highways (zum Beispiel Backbones) zu den ISPn nach einer Mailadresse, einem Buzzword (zum Beispiel der Bezeichnung einer Droge oder einer Teile-Nr. eines Waffenersatzteils) oder einer Mailadresse suchen. Danach kann die Anordnung diese Kommunikationsverbindung aufgrund der ermittelten dynamischen Adresse zuverlässig bis zum Ende der Kommunikation weiterverfolgen und die Inhalte an Bedarfsträger weiterleiten, auch wenn dieses eine Suchmerkmal (Buzzword, Bezeichnung der Droge, Teile-Nr. etc.) nur einmal in einem Frame/Paket vorkommt. Dies auch oder gerade, wenn diese Suchbegriffe in Protokollebenen oder Nutzdaten eingebunden sind, die für die Komponenten im Netz selbst nicht erreichbar sind.

Alternativ kann die erfindungsgemäße Anordnung den Dialog mit sogenannten RADIUS-Servern verfolgen, bei dem einem Internetteilnehmer über sein LOGON-ID und Passwort eine IP-Adresse dynamisch zugeordnet wird, um danach exakt den Datenstrom des zu überwachenden Teilnehmers auf dem Backbone herauszufiltern.

Viele Komponenten, wie Router, Switches etc., im Netz arbeiten heute nach dem sogenannten Cut Through-Verfahren, was bedeutet, dass die Frames/Datenpakete nach Sichtung der Adressinformationen aus den unteren Protokollschichten ohne jede weitere Sichtung und Analyse an die nächste Komponente im Netz weitergeleitet werden. Auf diese Weise wird vermieden, dass einerseits wichtige Übertragungszeit verloren geht und sich somit die Wirtschaftlichkeit von Datennetzen verschlechtert. Andererseits ist eine Einsichtnahme in die Nutzdaten ausgeschlossen.

Die Erfindung ist nicht auf die dargestellte Ausführungsform der Anordnung 10, die in den Fig. 1 bis 5 gezeigt ist, beschränkt. So ist es möglich, einzelne Bestandteile der Aufbereitungsvorrichtung 12 bzw. der Sendevorrichtung 14 bzw. der Empfangsvorrichtung 18 jeweils untereinander in beliebiger Weise zu verknüpfen. Insoweit können die einzelnen Bestandteile anstelle einer seriellen Anordnung, die ausschließlich aus Gründen einer vereinfachten Darstellungsweise gewählt ist, zueinander ebenso parallel und/oder seriell etc. angeordnet sein. Ebenso ist es denkbar, dass mehrere Aufbereitungsvorrichtungen 12 zueinander kaskadierbar sind.

Schließlich ist die erfindungsgemäße Anordnung 10 bereits ohne weiteres in der Lage, die von der Aufbereitungsvorrichtung 12 zur Verfügung gestellten Informationen anstatt zum Beispiel über ein Transitnetz 16, das als WAN ausgebildet ist, auch über Internet an den/die Bedarfsträger weiterleiten.

## Patentansprüche

1. Verfahren zur ortsunabhängigen Überwachung von Sprach- und/oder Datennetzverbindungen durch das Bundeskriminalamt, die Landeskriminalämter, das Zollkriminalamt, den Verfassungsschutz etc., nach richterlicher Genehmigung, umfassend folgende Schritte:
- Passive Aufschaltung auf wenigstens eine zu überwachende digitale bidirektionale Sprach- und/oder Datennetzverbindung (26) durch eine Aufbereitungsvorrichtung (12),
- passive Synchronisation auf beliebige Datenübertragungsprotokolle, Datenframes, Datenpakete und Datenzellen durch die Aufbereitungsvorrichtung (12),
- Auswahl, Lokalisierung und Trennung von synchronisierten Protokollen und/oder Daten durch die Aufbereitungsvorrichtung (12), wobei bei der Auswahl der synchronisierten Protokolle und/oder Daten eine Filterung zur Bestimmung von zu dekodierenden, synchronisierten Protokollen und aus ausgewählten Protokollschichten zu extrahierenden und zu kopierenden Daten vorgenommen wird,
- Auslesen der für die Überwachung relevanten Daten, Ereignisse und Ereignisfolgen durch die Aufbereitungsvorrichtung (12) und Übergeben der für die Überwachung relevanten Daten, Ereignisse und Ereignisfolgen an eine Sendevorrichtung (14),
- Bitratenadaption durch die Sendevorrichtung (14),
- nach Sende- und Empfangsdaten, -ereignissen und -ereignisfolgen getrennte Übertragung der ausgelesenen Daten, Ereignisse und Ereignisfolgen von der Sendevorrichtung (14) über mehrere unterschiedliche Transitnetze mit zwei oder mehr gesonderten Kanälen zu einer Empfangsvorrichtung (18) an einem für deren Auswertung vorgesehenen Ort,
- Bitratenadaption durch die Empfangsvorrichtung (18), und
- Aufbereitung und Zusammenführung der getrennt übertragenen Daten, Ereignisse und Ereignisfolgen an dem für die Auswertung vorgesehenen Ort.

2. Verfahren nach Anspruch 1, **dadurch gekennzeichnet, dass** bei der Synchronisation eine Frame- oder Zell-Synchronisation auf beliebige Datenübertragungsprotokolle vorgenommen wird.

3. Verfahren nach Anspruch 1 oder 2, **dadurch gekennzeichnet, dass** bei der Frame- oder Zell-Synchronisation eine Cyclic Redundanz Check CRC-/Frame Check-Sequenz FCS-Überprüfung zur fehlerfreien Lesbarkeit und/oder Kopierbarkeit von Frames durchgeführt wird.

4. Verfahren nach einem der Ansprüche 1 bis 3, **dadurch gekennzeichnet, dass** die Daten, Ereignisse und Ereignisfolgen von der Aufbereitungsvorrichtung (12) über mindestens ein Transportnetz an eine, räumlich getrennte, Sendevorrichtung (14) zur Übertragung über die Transitnetze (16) an die Empfangsvorrichtung (18) übergeben werden.

5. Verfahren nach einem der Ansprüche 1 bis 3, **dadurch gekennzeichnet, dass** die Daten, Ereignisse und Ereignisfolgen von mehreren Aufbereitungsvorrichtungen (12) über wenigstens ein Transportnetz an eine, räumlich getrennte, Sendevorrichtung (14) zur Übertragung über die Transitnetze (16) an die Empfangsvorrichtung (18) übergeben werden.

6. Verfahren nach einem der Ansprüche 1 bis 5, **dadurch gekennzeichnet, dass** die Daten getrennt von den Ereignissen und Ereignisfolgen von der/den Aufbereitungsvorrichtung/en (12) an die Sendevorrichtung (14) übergeben werden.

7. Verfahren nach einem der Ansprüche 1 bis 6, **dadurch gekennzeichnet, dass** die Daten, Ereignisse und Ereignisfolgen von der Sendevorrichtung (14) an die Besonderheiten der Transitnetze nach Sende- und Empfangsdaten, -ereignissen und -ereignisfolgen getrennt angepasst werden.

8. Verfahren nach einem der Ansprüche 1 bis 7, **dadurch gekennzeichnet, dass** die Daten getrennt von den Ereignissen und Ereignisfolgen von der Sendevorrichtung (14) über die Transitnetze (16) an die Empfangsvorrichtung (18) übertragen werden.

9. Verfahren nach einem der Ansprüche 1 bis 8, **dadurch gekennzeichnet, dass** die Daten getrennt von den Ereignissen und Ereignisfolgen von der Sendevorrichtung (14) über die Transitnetze (16) direkt an eine kompatible Empfangsvorrichtung bei einem oder mehreren Bedarfsträgern übertragen werden.

## Claims

1. Procedure for decentralised monitoring of speech and/or data network connections through the Federal Bureau of Criminal Investigation, the regional bureaus of criminal investigation, the customs office of criminal investigation, the Federal Office for the Protection of the Constitution etc., according to judicial authorisation, comprising the following steps:
- Passive circuit-switching, via a preparation device (12), onto at least one digital bidirectional speech and/or data network connection (26) that is to be monitored,
- passive synchronisation on any data transmission protocols, data frames, data packets and data cells via the preparation device (12),
- selection, localisation and separation of synchronised protocols and/or data via the preparation device (12), whereby filtration for determination of protocols to be decrypted, synchronised protocols and data to be extracted and copied from selected protocol layers takes place during the selection of synchronised protocols and/or data,
- readout of the data, events and series of events relevant for the monitoring process, via the preparation device (12), and delivery of the data, events and series of events relevant for the monitoring process to a transmitting device (14),
- bit rate adaptation via the transmitting device (14),
- separate transmission, according to transmission and reception data, events and series of events, of the read out data, events and series of events from the transmitting device (14) via several different transmission networks having two or more separate channels to a reception device (18) at a location designated for their analysis,
- bit rate adaptation via the reception device (18), and
- preparation and consolidation of the separately transmitted data, events and series of events at the location designated for the analysis.

2. Procedure according to claim 1, **characterised by** the fact that frame or cell synchronisation on any data transmission protocols is undertaken during synchronisation.

3. Procedure according to either of the claims 1 or 2, **characterised by** the fact that a Cyclic Redundancy Check CRC/Frame Check Sequence FCS examination for error-free readability and/or copy-ability of frames is undertaken during frame or cell synchronisation.

4. Procedure according to either of the claims 1 to 3, **characterised by** the fact that the data, events and series of events are transferred from the preparation device (12) via at least one transmission network to a, spatially separated, transmitting device (14) for transmission via the transit networks (16) to the reception device (18).

5. Procedure according to either of the claims 1 to 3, **characterised by** the fact that the data, events and series of events are transferred from several preparation devices (12) via at least one transmission network to a, spatially separated, transmitting device (14) for transmission via the transit networks (16) to the reception device (18).

6. Procedure according to either of the claims 1 to 5, **characterised by** the fact that the data are transferred from the preparation device/s (12) to the transmitting device (14) separately from the events and series of events.

7. Procedure according to either of the claims 1 to 6, **characterised by** the fact that the data, events and series of events are separately adapted by the transmitting device (14), according to transmission and reception data, events and series of events, to the particularities of the transit networks.

8. Procedure according to either of the claims 1 to 7, **characterised by** the fact that the data are transmitted from the transmitting device (14) via the transmission networks (16) to the reception device (18) separately from the events and series of events.

9. Procedure according to either of the claims 1 to 8, **characterised by** the fact the data are transmitted from the transmitting device (14) via the transmission networks (16) directly to a compatible reception device at one or more consumers separately from the events and series of events.

## Revendications

1. Procédé pour surveiller de façon indépendante du lieu, des liaisons phoniques et/ou de réseaux de données par le bureau des affaires criminelles de l'état fédéral, les bureaux des affaires criminelles des Laender, le bureau de répression des fraudes fiscales, l'institution pour protéger la constitution etc., après une autorisation du juge, comprenant les étapes suivantes :
- connexion sur au moins une liaison numérique bidirectionnelle (26) phonique et/ou de réseaux de données au moyen d'un dispositif de traitement (12),
- synchronisation passive sur des protocoles de liaisons de données, structure de données, paquets de données et cellules de mémoire à volonté au moyen du dispositif de traitement (12),
- choix, localisation et séparation de protocoles et/ou données synchronisés au moyen du dispositif de traitement (12), où on effectue pendant le choix des protocoles et/ou des données synchronisés au moyen d'un filtrage pour déterminer des protocoles à décoder et synchronisés et où on filtre à partir des couches de protocoles choisies des données à extraire et à copier,
- lecture des données, évènements et suites d'événement significatifs pour la surveillance par le dispositif de traitement (12) et transfert des données, évènements et suites d'évènement significatifs pour la surveillance à un dispositif d'envoi (14),
- adaptation des taux de bits par le dispositif d'envoi (14),
- transfert des données, d'évènements et de suites d'évènements séparément selon les données, les évènements et les suites d'évènements d'envoi et de réception au moyen du dispositif d'envoi (14) par l'intermédiaire de plusieurs réseaux de transit différents avec deux ou plusieurs canaux séparés vers un dispositif de réception (18) situé à un endroit destiné au traitement des données, d'évènements et de suites d'évènements,
- adaptation des taux de bits par un dispositif de réception (18), et
- traitement et regroupement des données, des évènements et des suites d'évènements à l'endroit destiné au traitement.

2. Procédé selon la revendication 1,, **caractérisé en ce que** l'on effectue pendant la synchronisation une synchronisation structurelle ou de cellule sur des protocoles de transferts de données à volonté.

3. Procédé selon la revendication 1 ou 2, **caractérisé en ce que** l'on effectue pendant la synchronisation structurelle ou de cellule de vérification de test de redondance cyclique CRC/une séquence de teste structurelle FCS pour pouvoir lire et/ou copier sans erreur des structures.

4. Procédé selon une des revendications 1 à 3, **caractérisé en ce que** l'on transfert les données, évènements et suites d'évènements à partir du dispositif de traitement (12) vers un, spatialement séparé, dispositif d'envoi (14) via , au moins, un réseau de transit pour être transférés via les réseaux de transit (16) vers le dispositif de réception (18).

5. Procédé selon une des revendications 1 à 3, **caractérisé en ce que** l'on transfert les données, évènements et suites d'évènements à partir des plusieurs dispositifs de traitement (12) vers un, spatialement séparé, dispositif d'envoi (14) via, au moins, un réseau de transit pour être transférés via les réseaux de transit (16) vers le dispositif de réception (18).

6. Procédé selon une des revendications 1 à 5, **caractérisé en ce que** l'on transfert les données à partir du/des dispositif/s de traitement (12) vers le dispositif d'envoi (14) séparément selon les évènements et selon les suites d'évènements.

7. Procédé selon une des revendications 1 à 6, **caractérisé en ce que** l'on adapte les données, les évènements et les suites d'évènements transférés par le dispositif d'envoi (14) aux particularités des réseaux de transit séparément selon les données envoyées et reçues, selon les évènements envoyés et reçus et selon les suites d'évènements envoyées et reçues.

8. Procédé selon une des revendications 1 à 7, **caractérisé en ce que** l'on transfert les données à partir du dispositif d'envoi (14) vers le dispositif de réception (18) via les réseaux de transit séparément selon les évènements et selon les suites d'évènements.

9. Procédé selon une des revendications 1 à 8, **caractérisé en ce que** l'on transfert les données à partir du dispositif d'envoi (14) directement vers un dispositif de réception compatible à un ou plusieurs organisation/s à travers via les réseaux de transit (16) séparément selon les évènements et selon les suites d'évènements.
